# EUROPÄISCHE PATENTANMELDUNG

(11) **EP 1 264 654 A1**
(43) Veröffentlichungstag der Anmeldung: **11.12.2002**
(21) Anmeldenummer: 01810554.4
(22) Anmeldetag: 08.06.2001
(51) Int. Cl.: B23K 3/06

(54) **Verfahren und Einrichtung zum Auftragen von Lot**

(71) Anmelder: Esec Trading S.A., 6330 Cham (CH)
(72) Erfinder: Kellenberger, Daniel, 6003 Luzern (CH)
(74) Vertreter: Falk, Urs, Dr.

(57) **Zusammenfassung**

Beim Auftragen von Lot auf ein Substrat wird ein Lotdraht (4) mit dem Substrat (1) in Kontakt gebracht und vom Substrat (1) aufgeschmolzen. Es wird ein Formstempel (9) verwendet, um der aufgeschmolzenen Lotportion eine vorbestimmte Form zu geben. Der Lotdraht (4) wird durch eine Bohrung (11) des Formstempels (9) geführt. Die Temperatur des Lotdrahtes (4) wird auf einen vorbestimmten Wert geregelt. Die Temperatur des Lotdrahtes (4) wird auf einen Wert unterhalb der Liquidustemperatur des Lotdrahtes (4) geregelt, der so tief ist, dass unbeabsichtigt kein Lot aus der Bohrung (11) des Formstempels (9) fliesst. Bevorzugt wird die Temperatur auf einen Wert unterhalb der Solidustemperatur des Lotdrahtes (4) geregelt.

## Beschreibung

Die Erfindung betrifft ein Verfahren und eine Einrichtung zum Auftragen von Lot der im Oberbegriff des Anspruchs 1 genannten Art.

Lötverfahren dieser Art werden typischerweise - jedoch nicht ausschliesslich - bei der Montage von Halbleiterchips auf einem metallischen Träger, einem sogenannten Leadframe, angewendet. Hauptsächlich Leistungshalbleiter werden in der Regel mit dem Substrat, das üblicherweise aus Kupfer besteht, mittels Weichlötung verbunden, um über die Lötverbindung eine wirksame Ableitung der beim Betrieb entstehenden Verlustwärme aus dem Halbleiterchip zu gewährleisten. Allerdings werden, vor allem bei gesteigerter Leistungsdichte, hohe Anforderungen an die Homogenität der Lötverbindung gestellt, d.h. es werden definierte Dicke, gleichmässige Verteilung und einwandfreie Benetzung der Lotschicht über die ganze Chipfläche, bzw. völlige Blasenfreiheit sowie Reinheit der Lötstelle verlangt; andererseits soll aber das Lot möglichst nicht aus dem Lotspalt seitlich austreten und sich neben dem Chip ausbreiten, was wiederum eine genaue Dosierung und Positionierung der Lotportionen erfordert.

Es sind im Anwendungsbereich der Chip-Montage hauptsächlich drei Lötverfahren bekannt und im praktischen Einsatz. Im einen Fall wird das Ende eines Lötmetall-Drahtes mit dem über die Schmelztemperatur des Lotes erhitzten Substrat in Berührung gebracht, um ein Stück des Drahtes abzuschmelzen. Dieses sogenannte "Wire Dispense" Verfahren ist aufgrund seiner Einfachheit und Flexibilität für die Massenproduktion an sich gut geeignet. Jedoch hängt der Schmelzvorgang, vor allem das Volumen und die Positionierung der Lotportion, sehr stark von der Materialpaarung und den Oberflächeneigenschaften des Substrats ab, d.h. die Menge und Position des jeweils abschmelzenden Lotes sind erheblichen Streuungen unterworfen. So kommt es immer wieder vor, dass sich die Spitze des Lotdrahtes beim Auftreffen auf das Substrat verbiegt und dann schlecht aufgeschmolzen wird.

Aus der europäischen Patentanmeldung EP 852 983 ist es bekannt geworden, die abgeschmolzene Lotportion mittels eines Formstempels in eine der Gestalt der Halbleiterchips angepasste rechteckige oder quadratische Form zu bringen. Dieses zweistufige Verfahren eignet sich jedoch nicht für das Auftragen sehr grosser, sehr kleiner und/oder extrem rechteckförmiger Lotportionen.

Das zweite, aus den US Patenten US 4,577,398 und US 4,709,849 bekannte Verfahren besteht darin, dass flache Formlinge aus Lötmetall, deren Abmessungen auf die Chips abgestimmt sind, vorfabriziert werden. Die Formlinge werden dann auf das Substrat aufgelegt und von diesem aufgeschmolzen, um eine Lotschicht in den verlangten Dimensionen zu bilden. Wegen der erforderlichen Vorfabrikation der Lot-Formlinge und den zusätzlichen Montageoperationen ist diese Methode allerdings recht kostspielig und wenig flexibel.

Bei diesen beiden vorerwähnten Verfahren muss die Schmelzwärme dem kalten Lot über das Substrat zugeführt werden, was eine entsprechende Überhitzung desselben erfordert und eine gewisse Zeit in Anspruch nimmt, wobei die maximal mögliche Substrat-Temperatur limitiert ist.

Das dritte, aus dem europäischen Patent EP 752 294 bekannte Verfahren besteht darin, das Lot in einem Tiegel aufzuschmelzen und mittels eines Formstempels auf das Substrat aufzutragen. Das schmelzflüssige Lot wird dem Formstempel über eine enge Bohrung zugeführt, die auf der der Kavität des Formstempels abgewandten Seite abrupt aufgeweitet ist. Damit wird erreicht, dass das Lot nach Beendigung des Drahtvorschubzyklus an einer genau definierten Stelle abreisst, so dass die aufgetragene Lotmenge genau definiert ist. Nachteilig bei diesem Verfahren ist, dass sich die im Lot befindlichen Oxide im Tiegel ansammeln, was zu Verschmutzungen und Verstopfungen führt. Die Produktion muss jeweils unterbrochen werden, damit die verschmutzten Teile ausgewechselt und gereinigt werden können.

Der Erfindung liegt die Aufgabe zugrunde, ein Verfahren und eine Einrichtung zum Auftragen von Lot zu entwickeln, die die im Stand der Technik vorhandenen Mängel nicht mehr aufweisen.

Die genannte Aufgabe wird erfindungsgemäss gelöst durch die Merkmale der Ansprüche 1 und 3.

Die Erfindung geht aus von einem Verfahren zum Auftragen von Lot auf ein Substrat, bei dem ein Lotdraht mit dem Substrat in Kontakt gebracht und vom Substrat aufgeschmolzen wird. Die Temperatur des Lotdrahtes wird erfindungsgemäss geregelt und zwar auf einen vorbestimmten Wert, der unterhalb der Liquidustemperatur des Lotdrahtes, vorzugsweise unterhalb der Solidustemperatur des Lotdrahtes, liegt. Zudem wird erfindungsgemäss ein Formstempel verwendet, um der aufgetragenen Lotportion eine vorbestimmte Form zu geben. Der Lotdraht wird deshalb durch eine seiner Dicke angepasste Bohrung des Formstempels geführt.

Solange die Temperatur des Lotdrahtes unterhalb seiner Solidustemperatur bleibt, ist der Lotdraht noch immer in der festen Phase, d.h. im Aggregatszustand "fest". Bevorzugt wird der Lotdraht deshalb auf eine Temperatur im Bereich unterhalb der Solidustemperatur aufgeheizt. Dies gilt insbesondere für Lote, wo die Liqidustemperatur nur wenige Grade, typischerweise 5° bis 50° C, über der Solidustemperatur liegt.

Der Vorteil der Erfindung liegt darin, dass der aufgeheizte Draht beim Kontakt mit dem Substrat besser benetzt und dadurch schneller aufgeschmolzen wird als der im Stand der Technik übliche kalte Draht, was die Zykluszeit verkleinert.

Wenn die Differenz zwischen der Liquidustemperatur und der Solidustemperatur des Lotmittels 50° C und mehr beträgt, kann der Lotdraht auch auf eine Temperatur oberhalb der Solidustemperatur aufgeheizt werden. Es hat sich nämlich bei einem Lotmittel, dessen Solidustemperatur bei 235° C und dessen Liquidustemperatur bei etwa 400° C liegt, gezeigt, dass der Lotdraht bis auf 280° C bis 300° C aufgeheizt werden kann, ohne dass infolge der Schwerkraft Lot aus der Bohrung des Formstempels tropft. Wenn die Temperatur des Lotdrahtes die Solidustemperatur überschreitet, dann bildet sich neben der festen Phase eine flüssige Phase, die sogar eine andere stöchiometrische Zusammensetzung als die feste Phase haben kann. Die Temperatur des Lotdrahtes kann daher soweit über die Solidustemperatur hinaus erhöht werden, als dass beim Beenden des Lotdrahtvorschubs kein Lot der flüssigen Phase unbeabsichtigt aus der Bohrung des Formstempels herausfliesst.

Eine zur Durchführung des Verfahrens geeignete Einrichtung umfasst einen Dispenskopf mit einem den Lotdraht aufnehmenden Führungsrohr, wobei ein Tiegel das untere Ende des Führungsrohres umschliesst, und einen Temperaturfühler und eine Heizung, um die Temperatur des Tiegels auf einen vorbestimmten Wert zu regeln, der unterhalb der Solidustemperatur oder unterhalb der Liquidustemperatur des Lotdrahtes liegt. Am Tiegel ist ein Formstempel gelagert, so dass der feste Lotdraht durch eine im Formstempel vorhandene Bohrung in eine gegen das Substrat hin offene Kavität des Formstempels führbar ist. Der Formstempel gibt der aufzutragenden Lotportion die dem aufzulötenden Halbleiterchip angepasste rechteckförmige Gestalt.

Weitere Angaben zu den Begriffen Solidustemperatur und Liquidustemperatur enthält z.B. das Buch "Desk Handbook: phase diagrams for binary alloys" von H. Okamoto, Materials Park, Ohio, ASM International, 2000.

Nachfolgend wird ein Ausführungsbeispiel der Erfindung anhand der Zeichnung näher erläutert.

Es zeigen:
- Fig. 1: eine Einrichtung zum Auftragen von Lot, und
- Fig. 2A-F: aufeinanderfolgende Phasen eines Dispenszyklus.

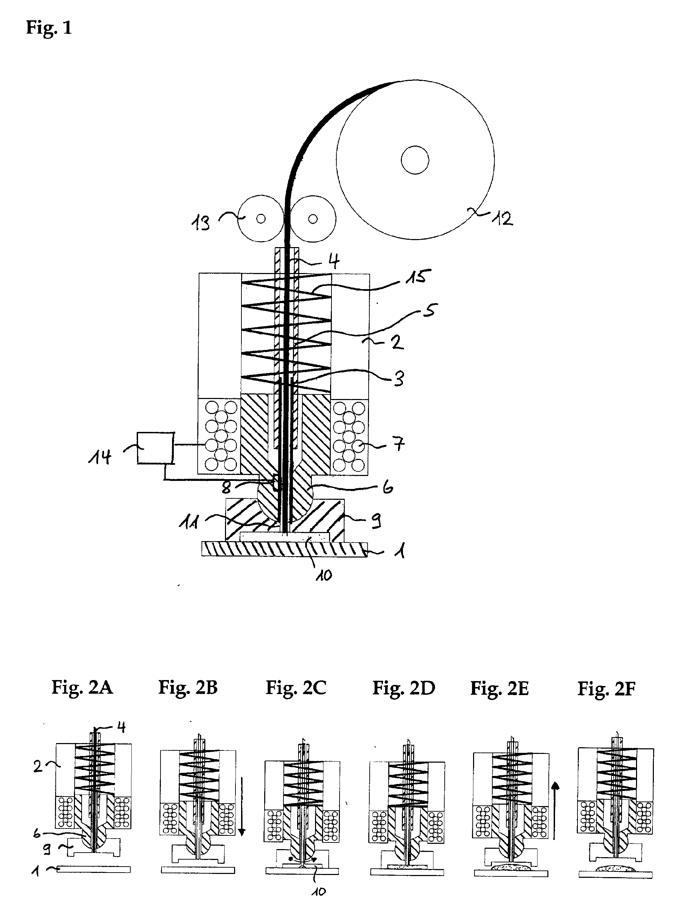

Die Fig. 1 zeigt eine Einrichtung zum Auftragen von draht- oder stangenförmigem Lot auf ein Substrat 1. Die Einrichtung umfasst einen heb- und senkbaren Dispenskopf 2 mit einem vertikal verlaufenden Führungsrohr 3, das einen von oben zugeführten Lotdraht 4 aufnimmt, und mit einem Kühlrohr 5, einem Tiegel 6, einer Heizung 7 und einem Temperaturfühler 8. Am Tiegel 6 ist ein auswechselbarer Formstempel 9 mit einer nach unten offenen Kavität 10 kardanisch gelagert, so dass sich der Formstempel 9 beim Aufsetzen auf dem Substrat 1 selbsttätig der Oberfläche des Substrats 1 anpassen kann. Der Formstempel 9 dient dazu, der aufgetragenen Lotportion eine vorbestimmte Form zu geben. Der Formstempel 9 weist auf der dem Tiegel 6 zugewandten Seite eine Bohrung 11 auf, deren Durchmesser grösser als der Durchmesser des Lotdrahtes 4 ist. Der Lotdraht 4 wird durch die Bohrung 11 des Formstempel 9 hindurchgeführt. Das Kühlrohr 5 umschliesst den oberen Teil des Führungsrohres 3. Der Tiegel 6 umschliesst den unteren Teil des Führungsrohres 3. Die Einrichtung umfasst weiter eine Drahthalterung 12, einen Antrieb 13 zum Vortrieb des Lotdrahtes 4 und ein Regelgerät 14 zur Regelung der Temperatur des Tiegels 6. Der Tiegel 6 ist zudem mittels einer vorgespannten Feder 15 verschiebbar im Dispenskopf 2 gelagert, so dass der Tiegel 6 beim Aufsetzen des Dispenskopfes 2 auf dem Substrat 1 einfedert.

Das Kühlrohr 5 wird von einem Kühlmittel, vorzugsweise Pressluft, durchströmt. Auf diese Weise wird der obere Teil des Führungsrohres 3 gekühlt. Die Heizung 7 heizt den Tiegel 6 und damit den unteren Teil des Führungsrohres 3. Der Temperaturfühler 8 ist im Tiegel 6 in der Nähe des Führungsrohres 3 angeordnet, sein Ausgangssignal ist dem Regelgerät 14 zugeführt. Das Regelgerät 14 regelt die Temperatur des Tiegels 6 auf einen vorbestimmten Wert, indem es die von der Heizung 7 zu erbringende Heizleistung steuert.

Die Einrichtung zum Auftragen von Lot ist Teil eines Montageautomaten, der Halbleiterchips auf ein metallisches Substrat 1, ein sogenanntes Leadframe, montiert. Das Substrat wird von einer nicht dargestellten Transportvorrichtung transportiert und zum Auftragen des Lots bereitgestellt. Zum Aufschmelzen des Lots und zum Flüssighalten des Lots bis der Halbleiterchip plaziert ist, wird das Substrat auf eine vorbestimmte Temperatur aufgeheizt, die in der Regel über der Liquidustemperatur des Lots liegt, damit der Lotdraht bei der Berührung des Substrats aufgeschmolzen wird. Dies führt dazu, dass dem Dispenskopf 2 dauernd Strahlungswärme zugeführt wird, wodurch sich der Tiegel 6 erwärmt. Durch das Kühlrohr 5 wird zwar ein Teil der zugeführten Wärme abgeführt, aber die Erwärmung des Tiegels 6 würde ohne weitere Massnahmen unkontrolliert erfolgen. Gemäss der Erfindung ist deshalb vorgesehen, die Temperatur des Lotdrahtes 4 auf einen konstanten vorbestimmten Wert zu regeln, der unterhalb der Liquidustemperatur des Lotdrahtes 4 liegt. Dies erfolgt, indem die Temperatur des Tiegels 6 mittels des Temperaturfühlers 8 gemessen und mittels des Regelgerätes 14 und der Heizung 7 geregelt wird. Durch diese Massnahme wird erreicht, dass die Bedingungen beim Aufschmelzen des Lotdrahtes 4 auf dem Substrat 1 sehr gut definiert sind. Die Temperatur des Lotdrahtes 4 wird vorzugsweise auf einen Wert etwas unterhalb der Solidustemperatur geregelt, so dass der Lotdraht 4 auf jeden Fall nur eine feste Phase ohne Flüssigkeitsanteile aufweist. Die Temperatur des Lotdrahtes 4 kann aber auch über die Solidustemperatur erhöht werden, allerdings nur soweit, als dass noch kein flüssiges Lot aus der Bohrung 11 des Formstempels 9 herausfliesst oder heraustropft.

Die Fig. 2A bis 2F zeigen aufeinanderfolgende Phasen eines Dispenszyklus. (Die Bezugszeichen sind nicht bei jeder Fig. eingetragen). Zu Beginn befindet sich der Dispenskopf 2 im Abstand oberhalb des Substrates 1 (Fig. 2A). Der Dispenskopf 2 wird gemäss dem bekannten Overtravel Verfahren abgesenkt (Fig. 2B) bis er auf dem Substrat 1 aufsetzt. Dabei federt der Tiegel 6 gegenüber dem Dispenskopf 2 ein und der Formstempel 9 richtet sich selbsttätig am Substrat 1 aus (Fig. 2C). Nun wird der Lotdraht 4 vom Antrieb 13 um eine vorbestimmte Distanz vorgeschoben. Sobald der Lotdraht 4 mit dem aufgeheizten Substrat 1 in Berührung kommt, wird er an der Spitze aufgeschmolzen, wobei sich das geschmolzene Lot in der Kavität 10 des Formstempels 9 verteilt und diese füllt (Fig. 2D). Anschliessend wird der Dispenskopf 2 angehoben (Fig. 2E), wobei das geschmolzene Lot an der Trennstelle, wo sich geschmolzenes Lot und Lotdraht 4 berühren, abreisst. Der Dispenskopf 2 ist nun für den nächsten Zyklus bereit (Fig. 2F).

Da die Temperatur des Tiegels 6 auf einen konstanten Wert geregelt wird, bei dem der Lotdraht 4 zwar weich, aber noch nicht geschmolzen ist, hat auch der Formstempel 9 eine wohl definierte Temperatur oder Temperaturverteilung, so dass die Lage der Trennstelle, wo sich geschmolzenes Lot und Lotdraht 4 berühren, genau definiert ist. Das Lot reisst deshalb immer an der gleichen Stelle ab, so dass die aufgetragene Lotmenge vernachlässigbaren Schwankungen unterliegt. Wenn die Temperatur des Tiegels 6 so eingestellt wird, dass die Temperatur des Formstempels 9 noch unterhalb der Solidustemperatur des Lotdrahtes 4 bleibt, befindet sich die Trennstelle, wo sich geschmolzenes Lot und Lotdraht 4 berühren, dort, wo die Bohrung 11 in die Kavität 10 übergeht.

Da der Lotdraht 4 im unteren Teil des Führungsrohres 3 bereits erwärmt wird, verbessert sich die Benetzung und das Aufschmelzen des Lotdrahtes 4 durch die vom Substrat 1 zugeführte Wärme. Ein Verbiegen des Lotdrahtes 4 wie beim Stand der Technik kommt nicht mehr vor.

Es gibt auch Lotlegierungen, die bereits unterhalb der Liquidustemperatur genügend flüssig sind, um sich im Formstempel 9 zu verteilen. Für das menschliche Auge sieht die aufgebrachte Lotportion wie eine flüssige Lotportion aus, obwohl sie noch ungelöste Anteile enthält. In diesem Fall reicht es aus, wenn das Substrat auf eine Temperatur unterhalb der Liquidustemperatur aufgeheizt wird.

## Patentansprüche

1. Verfahren zum Auftragen von Lot auf ein Substrat, bei dem ein Lotdraht (4) mit dem Substrat (1) in Kontakt gebracht und vom Substrat (1) aufgeschmolzen wird, **dadurch gekennzeichnet, dass** die Temperatur des Lotdrahtes (4) auf einen vorbestimmten Wert geregelt wird, dass ein Formstempel (9) verwendet wird, um der aufgeschmolzenen Lotportion eine vorbestimmte Form zu geben, wobei der Lotdraht (4) durch eine Bohrung (11) des Formstempels (9) geführt wird, und dass die Temperatur des Lotdrahtes (4) unterhalb der Liquidustemperatur des Lotdrahtes (4) liegt und so tief ist, dass unbeabsichtigt kein Lot aus der Bohrung (11) des Formstempels (9) fliesst.

2. Verfahren nach Anspruch 1, **dadurch gekennzeichnet, dass** die Temperatur des Lotdrahtes (4) unterhalb der Solidustemperatur des Lotdrahtes (4) liegt.

3. Einrichtung zum Auftragen von Lot auf ein Substrat, bei der ein Lotdraht (4) mit dem Substrat (1) in Kontakt gebracht und vom Substrat (1) aufgeschmolzen wird, **dadurch gekennzeichnet, dass** die Einrichtung einen Dispenskopf (2) mit einem den Lotdraht (4) aufnehmenden Führungsrohr (3) umfasst, wobei ein Tiegel (6) das untere Ende des Führungsrohres (3) umschliesst, dass ein Temperaturfühler (8) und eine Heizung (7) vorhanden sind, um die Temperatur des Tiegels (6) auf einen vorbestimmten Wert zu regeln, der unterhalb der Liquidustemperatur des Lotdrahtes (4) liegt und so tief ist, dass unbeabsichtigt kein Lot aus der Bohrung (11) des Formstempels (9) fliesst, dass am Tiegel (6) ein Formstempel (9) gelagert ist, und dass der Lotdraht (4) durch eine im Formstempel (9) vorhandene Bohrung (11) in eine gegen das Substrat (1) hin offene Kavität (10) des Formstempels (9) führbar ist.

4. Einrichtung nach Anspruch 3, **dadurch gekennzeichnet, dass** die Temperatur des Lotdrahtes (4) auf einen Wert regelbar ist, der unterhalb der Solidustemperatur des Lotdrahtes (4) liegt.

5. Einrichtung nach Anspruch 3 oder 4, **dadurch gekennzeichnet, dass** ein oberer Teil des Führungsrohres (3) von einem Kühlrohr (5) umschlossen ist.
